# EUROPEAN PATENT SPECIFICATION

(11) **EP 0 850 181 B1**
(45) Date of publication and mention of the grant of the patent: **09.02.2000**
(21) Application number: 96932935.8
(22) Date of filing: 23.08.1996
(51) Int. Cl.: B65D 81/05, C08J 9/224, C08J 9/00, C08J 9/12

(54) **BIODEGRADABLE MOLDED PACKING**
Biologisch abbaubare,geformte Verpackung
EMBALLAGE MOULE BIODEGRADABLE

(30) Priority: 08.09.1995 US 525329
(43) Date of publication of application: 01.07.1998
(73) Proprietor: Environmental Packing, L.P., Wilmington, DE 19810 (US)
(72) Inventor: REDD, Randall, Vann, Wilmington, DE 19808-1972 (US); SCHIEWETZ, Don, Boyd, Wilmington, DE 19810-2534 (US)
(74) Representative: Jones, Alan John
(86) International application number: US9613681
(87) International publication number: WO9709248

(56) References cited:
- EP-A- 0 667 369
- WO-A-94/10063
- US-A- 5 413 855

## Description

### FIELD OF THE INVENTION:

The invention is directed to biodegradable molded packing and to a method for making such packing. In particular, the invention is directed to biodegradable molded packing which is based on starch as the primary component.

### BACKGROUND OF THE INVENTION:

Expanded packing products, which are hardened foams, enjoy widespread use as loose-fill packing material. Loose-fill packing based on polystyrene constitutes a major market for expanded foam packing products. Such plastic foams have several drawbacks however. Firstly, their methods of manufacture are complex and therefore expensive. Secondly, the expansion (foaming) step in their manufacture involves a blowing agent, such as pentane, which presents a fire hazard or a chlorofluorcarbon, which is environmentally unacceptable unless a still more costly hydrofluorocarbon alternative blowing agent is used instead. Furthermore, although such packing can be formulated (at added cost) to be degradable in direct sunlight, it still suffers from the serious disadvantage that it is not biodegradable or hydrolytically degradable under the environmental conditions that prevail in compost heaps, landfills, or other common disposal means.

U.S. 3,137,592 to Protzman discloses heating a mixture of starch and water to 125-250C under pressure sufficient to maintain the water in the liquid state and then relieving the temperature and pressure in an extruder.

U.S. 4,588,638 and U.S. 4,644,733 to Dolinar are directed to expanded loose-fill packing comprising polymer particles (e.g. polyethylene) in which "at least a portion" of the surface of "a majority of the particles" are coated with an adhesive (such as glue, polymer latex or "starch-based adhesive") to reduce migration of the particles in use. The patents also disclose a method of packing articles in containers with such polymeric loose-fill particles.

U.S. 4,673,438 to Wittwer discloses injection molding starch-water mixtures which have been heated to a temperature above the T_{g} and melting point of the composition. The water content of the mixture is maintained throughout the molding process.

Lacourse et al. U.S. 4,863,655 discloses a biodegradable packing material comprising an expanded high amylose starch prepared by extruding the starch in the presence of up to 21% moisture. High amylose starch is, of course, quite expensive.

U.S. 5,300,333 to Wilkerson et al is directed to moldable mixtures comprising expanded grains such as popcorn, which are dispersed in a continuous phase of biodegradable bonding agent, such as starch paste.

U.S. 5,413,855 to Kolaska et al is directed to molded bodies comprised of expanded beads of starch, poly(vinyl alcohol) and water which are placed in a closed mold and then heated with low humidity air or dry steam to dissolve the surface of the beads and make the beads stick together.

U.S. 5,095,054 at Lay et al. is directed to the manufacture of shaped articles by extruding a material comprising a destructurized starch and any of several classes of organic polymers and copolymers such as modified polysaccharides, poly(vinyl pyrrolidone), cationic and anionic starches, poly(vinyl acetate) polymers and copolymers and the like. The polymers are added for the purpose of increasing stability, stiffness, elasticity, etc., of the shaped articles.

EP-A-667 369 discloses expanded articles made of starch, thermoplastic polymer and water, to be used as protective package material.

While the use of loose-fill packing of this kind has been widely accepted, such environmentally friendly packaging has not been available for the manufacture of molded packaging shapes, such as those which are used to package electronic components and other fragile items. Heretofore, such molded packing shapes have largely been made from non-degradable synthetic polymeric materials such as polystyrene.

### SUMMARY OF THE INVENTION:

The invention is therefore directed in a first aspect to a method for making molded packing shapes comprising the sequential steps:
(1) forming a plurality of particles having a density of 0.003 to 0.03 g/cc comprising a foamed admixture of starch and biodegradable polymer, the size of the particles being from 1 to 50 mm;
(2) applying to the surface of the particles a liquid to effect wetting and softening of the surfaces of the particles;
(3) compressing the surface-softened particles to effect cohesion between the surfaces of the softened particles, densification of the particles and formation of a shaped article;
(4) maintaining, without applying extraneous heat, the shaped article at a temperature and pressure for a time sufficient to render the surface of the particles non-tacky by adsorption of the wetting liquid into the particles and by evaporation of the wetting liquid;
characterised by steps (5) to (7) hereinafter set forth in Claim 1.

### BRIEF DESCRIPTION OF THE DRAWING:

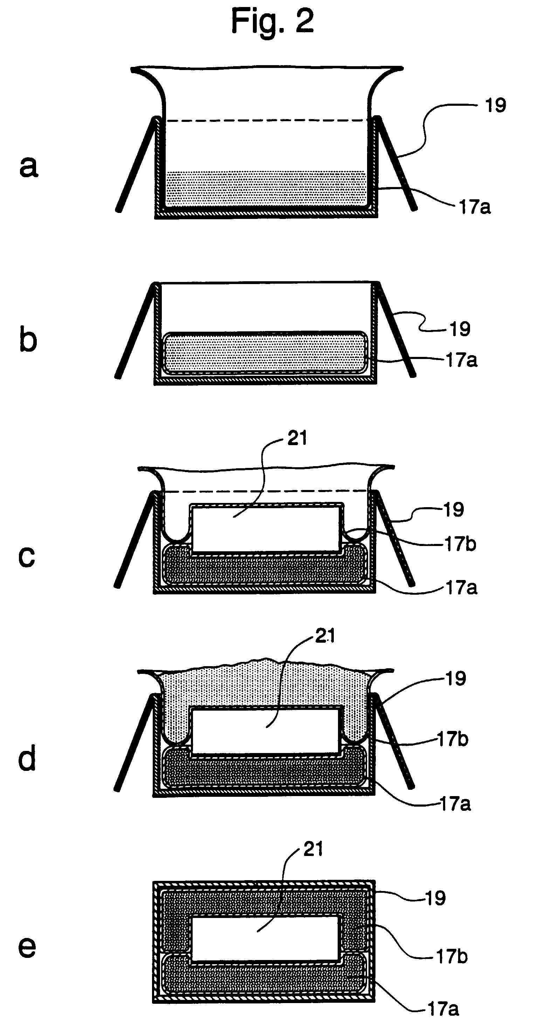

The Drawing consists of two sheets containing Figure 15 and 2a - e; both are schematic representations of the equipment and procedure used for carrying out a preferred aspect of the invention.

### DETAILED DESCRIPTION OF THE INVENTION:

### Starch Component:

The starch/polymer composition which can be used in the invention can utilize starch derived from any natural source so long as it is gelatinizable by the application of heat and pressure. Thus, unmodified and modified potato, wheat, tapioca, rice, corn, sago starches and mixtures thereof may be used. In addition, genetically modified starches in which the ratio of branched and unbranched chains has been altered can also be used so long as they are gelatinizable under the temperature and pressure conditions characteristic of extruder operation. In this regard, high amylose corn, which is comprised of straight chain starch molecules, would not be preferred because it is difficult to gelatinize even in boiling water.

### Polymer Component:

A wide variety of polymers, including copolymers, may be used in conjunction with the above-described starch composition so long as they are biodegradable. In addition, these polymers must be both thermoplastic and dispersible in water. Water-soluble polymers, such as poly(vinyl alcohol) are preferred. However, mixtures of water-dispersible polymers and minor amounts of water-insoluble polymers can be used. Such polymers are disclosed in U.S. 5,095,054 to Lay et al. and include the following classes:
(1) Multifunctional polymers atleast one functional group of which is hydroxyl;
(2) Multifunctional polymers at least one functional group of which is carboxyl;
(3) Polymers containing tertiary or quaternary amino groups or salts thereof;
(4) Modified polysaccharides containing hydroxyalkyl, alkyl ether or ester groups;
(5) Copolymers of vinyl pyrrolidone;
(6) Cationically modified polysaccharides;
(7) Anionically modified polysaccharides;
(8) Copolymers of vinyl esters and non-function monomers in which the ester group is hydrolyzed;
(9) Polysaccharide graft copolymers;
(10) Poly(alkylenimines) and copolymers thereof:
(11) Styrene sulfonic acid polymers and copolymers; and
(12) Carboxylic polymer and copolymer salts.

Mixtures of water-soluble and water-insoluble polymers may be used.

Because of its low price and superior physical properties, the preferred water-soluble polymer for use in the invention is poly(vinyl alcohol). So long as the poly(vinyl alcohol) [PVA] is water soluble, the degree of hydrolysis of the polymer is not a critical variable. Most available grades of PVA are, however, at least 88% hydrolyzed and frequently are at least 93% hydrolyzed. For use in the invention, it is preferred that polymer be supplied in granular form so that it can be easily mixed with the water-soluble polyhydric compound. From 2-20% by weight PVA, basis total composition, is ordinarily needed in the invention with 12-18% weight being preferred.

As used herein, the term "water soluble" refers to solubility of the polymer in unheated water such as tap water or water at ambient or room temperature.

### Other Components:

The biodegradable starch-polymer mixtures for use in the invention can and will usually contain small amounts of additives such as lubricating agents, nucleating agents and the like. Talc, fumed silica, silica and the like can be used as nucleating agents for the invention. Suitable lubricating agents include such materials as poly(ethylene glycol), hydrogenated and nonhydrogenated vegetable oils, substituted and unsubstituted fatty acids, soaps and greases. Such additives will not usually be used at a total level more than about 5% by weight, basis combined weight of the starch and polymer.

### Loose-fill Particle Manufacture:

The loose-fill packing for use in the invention is preferably made from an admixture of biodegradable starch and water-dispersible biodegradable polymer and water in the following range of concentrations:

| | | |
|---|---|---|
| Starch | 80-90% wt. | (preferably 82-88% wt.) |
| Biodegradable polymer | 20-10% wt. | (preferably 18-12% wt.) |

The ingredients are easily mixed by adding them to a low-shear mixing device such as a ribbon or paddle mixer. It is preferred that the dry components be blended first after which the water is added. The amount of water added relative to the weight of dry components will be varied according to the desired density of the particles. The amount of water added is typically on the order of about 12% wt., basis dry components for most loose-fill packing.

The loose-fill particles from which the molded packing of the invention is made from the above-described starch/polymer mixtures are processed into loose-fill packing by extrusion using conventional single or twin-screw extruders which can have one or more die heads. For the purposes of the invention, it is preferred that the extruder be operated at a die pressure of 500-3000 psi, a die temperature of no more than 120C and residence time of no more than one (1) minute, and preferably less than thirty (30) seconds.

It is recognized that, as the extrudable composition is compressed within the extruder, its temperature may exceed the die temperature. However, so long as the residence time within the extruder is less than one (1) minute, there will be little thermal degradation of the composition and the foamed product.

In a preferred method of carrying out the extrusion operation, the water content of the extruded loose-fill packing is measured and the water content of the admixture entering the extruder is adjusted in accordance with the bulk density of the extruded product. It has been found that the amount of water in the admixture fed to the extruder should be about 20 - 25% by weight, basis starch solids. In many operations, it is desired that the bulk density of the extruded product be as low as possible and a suitable bulk density is specified for commercial scale production. If the bulk density is below the preselected value, the amount of water in the feed to the extruder is reduced. On the other hand, if the bulk density is above the preselected value or if the product is too friable, the amount of water in the feed is raised.

It is preferred that the residence time of the admixture within the extruder not exceed about one (1) minute and that the maximum temperature attained by the feed within the extruder not exceed about 120C, lest some of the raw materials become excessively degraded by thermal decomposition. It will be observed that the maximum temperature within the extruder will normally be higher than the temperature at the die head and in some instances it may be desired to cool the jacket of the extruder. It is further preferred that the residence time within the extruder not exceed thirty seconds. It will be clear to those skilled in the art that the starch contained in the extruder feed undergoes gelatinization, but it is not necessary that the starch be destructurized in the manner taught in the Lay et al. Patent. Nevertheless, such destructurized starch/polymer mixtures may be used in the invention.

For most economical operation, the discharge from the extruder can be made directly to room ambient conditions. Special cooling is not required to obtain rapid solidification at room temperature.

It is preferred in the practice of the invention that the loose-fill particles have no dimension smaller than about 1 mm and preferably at least 3mm. On the other hand, it is preferred that the maximum dimension of the particles be no larger than about 50 mm. Particles which are roughly cylindrical in shape having a diameter of about 15-20 mm and a length of about 30 mm are preferred because they have superior densification and packing characteristics. Cylindrical shapes are, of course, conveniently produced in the formation of foamed particles by extrusion. Though cylindrical shapes have been found to be advantageous, irregular shapes and other regular shapes can also be used, such as spheres and ellipsoids.

### Application of Wetting Liquid:

The method of applying liquid to wet and soften the surface of the particles of foamed starch-polymer admixture is not difficult. For example, the liquid can be applied by dispersing the particles in air and spraying the liquid onto the dispersed particles. It can also be applied by dropping the particles through a spray of fine droplets of the wetting liquid. The particular method of applying the liquid is not critical so long as a major amount of the particle surfaces are wetted. When the particle surfaces are treated with water, the water on the surface tends to be removed rapidly from the surface by adsorption into the particle and by evaporation into atmosphere. Therefore, it is preferred to subject the particles to molding promptly after the surfaces are treated with water. For this reason, it is preferred that the wetting operation as well as the molding operation be carried out at ambient temperatures and that no heat be applied either to the particles or to the wetting liquid.

Molding of the loose-fill packing can be carried out in a number of ways. For example, the wetted packing can be placed in a shaped mold and formed in the conventional manner by application of pressure to the mold so that the mass of loose-fill assumes the shape of the interior of the mold.

A preferred manner of use, however, involves in situ molding. In this manner of molding, a layer of wetted loose-fill packing is placed in the bottom of a shipping container and covered with a thin sheet of paper or plastic or wrapped in a thin bag made of paper or plastic which is placed in the bottom of the shipping container. The object to be shipped is then placed on top of the covered or bagged layer of packing. If the object to be shipped is heavy enough, its weight by itself deforms the wetted packing into the shape of the bottom of the object. If it is not sufficiently heavy, a slight downward pressure applied to the top of the object can be applied to deform the wetted packing into the appropriate shape. Additional loose-fill is then poured into the space surrounding the object and on top of the object above the top level of the sides of the container and covered with a thin sheet of paper or plastic or a second bag of the wetted loose-fill can be used. In this instance, the second addition of loose-fill should be overfilled so that when the container is closed, pressure is applied to the wetted loose-fill so that it assumes the shape of the top of the object and inner surface of the closure.

In all such methods of using the invention, it is important that the surface of the loose-fill packing be wetted and softened at the time the molding pressure is applied. However, it is important that the amount of water applied to the particles be such that the particles are capable of becoming non-tacky by adsorption and evaporation of the water from the molded particles. It is preferred that the surface of the wetted and molded particles become non-tacky within 5 minutes and preferably within 2 minutes after the molding is completed. If the drying time of the particles is too long, the amount of water applied should be reduced. However, if the particles dry out too fast, the amount of water applied should be increased.

By the same token, it will be recognized that the amount of surface wetting of the loose-fill must be sufficient that the surface remains moist until completion of the molding step. When the molding step is complete, the molded body gradually becomes non-tacky as the surface moisture is adsorbed into the particles or the cover or bag, if one is used, and/or evaporated. A particular advantage of the use of these methods of forming molded packaging is that it is not required to use heat during any of the molding operation. In fact, it is preferred not to use added heat.

It is preferred that the paper or plastic sheet used in the *in situ* molding technique also be biodegradable to facilitate disposal of the loose-fill packing and the sheet. Sheets or bags made of poly(lactide) or poly(vinyl alcohol) are particularly useful in this application. An additional advantage of poly(vinyl alcohol) bags or films is their water solubility. By interacting with the wetted particles, the film binds to them, forming a more rigid cushion that is both water soluble and biodegradable.

A distinct advantage of the invention is that it does not require the addition of heat in any stage of the process. In fact, the addition of heat is detrimental in that it speeds up both the adsorption of the wetting liquid into the particles as well as the rate of evaporation of wetting liquid from the surfaces. Thus, the interval of time during which proper cohesion of the particles can be achieved as they undergo compression is reduced substantially. On the other hand, cooling of the wetting liquid is not preferred since the wetting and softening of the packing surfaces becomes slower. Thus, for maximum efficiency, the method of the invention should be carried out at ambient temperatures, i.e. temperatures from about 20 to about 45C.

In the following detailed discussion of the method of the invention, the loose-fill packing used was based on a mixture of potato starch, wheat starch, poly (vinyl alcohol), talc, hydrogenated vegetable oil and water. The components were mixed together in a ribbon blender and fed to a twin-screw extruder in which they were formed into cylinders having a length of about 30 mm and a diameter of about 15 mm and a density of about 0.022 g/cc.

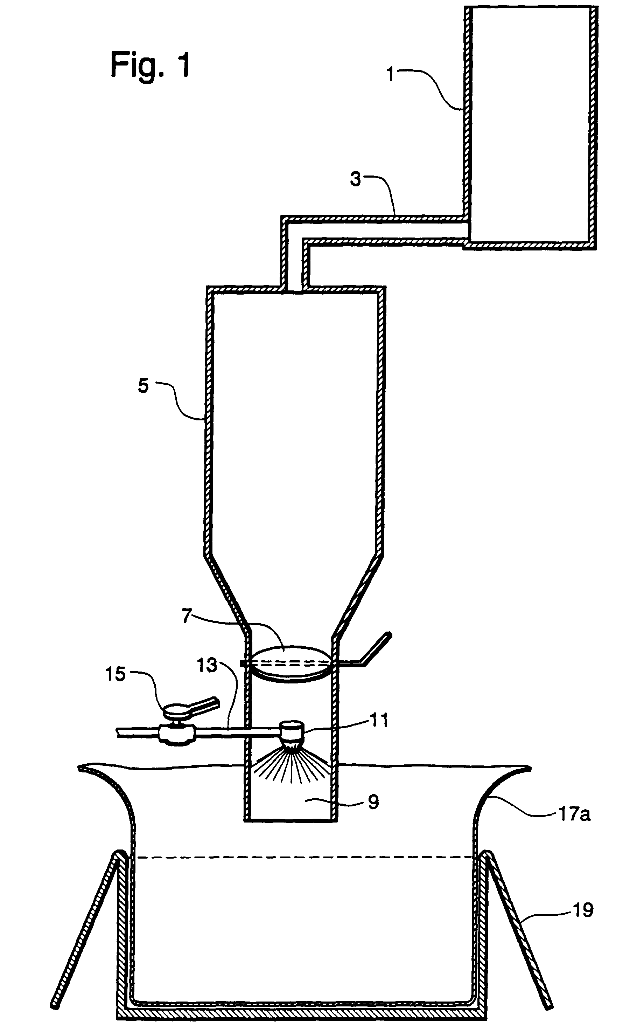

A preferred method for carrying out the invention is illustrated by Figure 1 of the Drawing. Dry loose-fill packing as described hereinabove is passed from storage silo 1 through fill line 3 into dispensing hopper 5, the outlet of which is fitted with a flapper valve 7 for gravity release of the dry packing into spray chamber 9. The spray chamber 9 is fitted with a spray nozzle 11. Unheated water is supplied through water line 13 in which the flow rate of the water is controlled by valve 15. It is preferred that the water spray be directed radially and/or downwardly in order to avoid wetting the sides of the spray chamber 9 above the water spray and the lower end of the dispensing hopper 5. This configuration of the spray significantly reduces the possible problem of loose-fill particles sticking to the sides of the spray chamber 9 during spray operation. When operation of the spray is begun, it is preferred that the water valve 15 and flapper valve 7 be opened simultaneously. The loose-fill particles falling through the water spray and through the lower end of spray chamber 9 fall directly into an open biodegradable bag 17a which is placed in the bottom of open shipping container 19, having top lid flaps which are opened. (See Figure 2a) When sufficient particles have been placed in the bag 17 for bottom protection of the article, the spray and flow of particles are both terminated and the bag is closed by folding the open end of the bag. (See Figure 2b) The article to be shipped 21 is placed on top of the bag 17 containing the loose-fill packing, leaving a space between the inside walls of the container 19 and the outer side surfaces of the shipping article 21. When the article to be shipped is of sufficient weight, further compression is not needed. However, if the article 21 is insufficient by its own weight to compress the wetted loose-fill in the bag, a slight pressure can be applied manually to the bag 17a by pressing down on the placed shipping article (See Figure 2c).

A second biodegradable bag 17b is then placed atop the article being shipped and in the space between the container and the shipping article with the top of the bag opened upwardly. The water supply valve 13 and the flapper valve 7 are again opened simultaneously to transfer surface-wetted loose-fill packing into the second bag 17b and thus provide surface-wetted loose-fill particles in the space surrounding and on top of the article to be shipped 21. An amount of loose-fill particles is provided sufficient to fill the space surrounding the article to be shipped 21 and to overfill the container 19, i.e. to fill the container above the top level of the shipping space of the container 19. The overfill of particles is contained by the bag 17b. (See Figure 2d) The lid flaps are then closed, by which a compressive force is exerted on the particles and the wetted particles in the second bag 17b are cohesively joined. (See Figure 2e) So long as the water content of the particles is carefully controlled, the surface of the particles becomes non-tacky within a few minutes after the particles are compressed as the water on the surface of the particles is adsorbed into the particles and/or is evaporated from the surface of the exposed surfaces of the particles. A separate drying step is not ordinarily required.

In the above-described operation, if the bags or sheets containing the molded packing are not biodegradable, they should be recycled or disposed of in accordance with local regulations. However, the loose-fill packing itself, which is biodegradable, may be disposed of by composting or merely allowing it to be decomposed on or in the ground. Suitable biodegradable materials for the bags or sheets include poly(lactide), poly(ethylene vinyl alcohol), polycaprolactone, and poly(vinyl alcohol). Cellulosic materials, such as methyl hydroxy propyl cellulose, can also be used.

The combination of limited water addition by adsorption within the particles and compression of the particles serves to increase the density of the particles and also to increase the modulus of elasticity of the agglomerated particle mass. Thus, the molded packing made by the invention has an improved ability for the absorption of shocks which are often experienced in the handling and shipping of loaded cartons.

## Claims

1. A method for making molded packing shapes comprising the sequential steps:
(1) forming a plurality of particles having a density of 0.003 - 0.03 g/cc comprising a foamed admixture of starch biodegradable polymer and water, the size of the particles being from 1 to 50 mm;
(2) applying to the surface of the particles an unheated aqueous liquid to effect wetting and softening of the surfaces of the particles.
(3) compressing, without applying extraneous heat, the surface-softened particles to effect cohesion between the surfaces of the softened particles, densification of the particles and formation of a shaped article; and
(4) maintaining, without applying extraneous heat, the shaped article under such compression for a time sufficient to render the surface of the particles non-tacky by adsorption of the wetting liquid into the particles and by evaporation of the wetting liquid,
characterised in that
(5) the surface-wetted particles are placed in the bottom of a shipping container (19) and an article for shipment (21) is placed atop the wetted particles to effect compression of the particles leaving a space between the outer sides of the article for shipment (21) and the inner sides of the container (19);
(6) the space between the outer sides of the article and the inner sides of the container is filled and the article is covered with wetted particles to a level rising above the sides of the shipping container; and
(7) the container (19) is closed to effect compression of the wetted particles and cohesion of the wetted particles in conformation with the inner surfaces of the container (19) and the outer surfaces of the article for shipment (21).

2. The method of claim 1 in which the particles in the bottom layer are contained in a bag (17a).

3. The method of claim 1 in which the particles filling the sides of the container and covering the top of the article are contained in a bag (17b).

4. The method of claim 1 in which step (5) further comprises the step of placement of a thin flexible sheet of film material (17a) atop the wetted particles in the bottom of the shipping container (19) before the placement of the article for shipment (21).

5. The method of claims 3 or 4 in which the bag (17a,17b) and film (17a) materials are biodegradable.

6. The method of claim 5 in which the biodegradable bag and film are made of poly(lactide).

7. The method of claim 5 in which the biodegradable bag and film material is selected from poly(lactide), poly(ethylene vinyl alcohol), polycaprolactone and mixtures thereof.

8. The method of claim 5 in which the biodegradable bag and film are made from poly(vinyl alcohol).

9. The method of claim 5 in which the biodegradable bag or film is made from a cellulosic material.

## Patentansprüche

1. Verfahren zur Herstellung von geformten Verpackungsformen, das die aufeinanderfolgenden Schritte umfaßt:
(1) Formen einer Vielzahl von Partikeln, die eine Dichte von 0,003 bis 0,03 g/cc haben und eine geschäumte Mischung von Stärke, biologisch abbaubarem Polymer und Wasser umfassen, wobei die Größe der Partikel von 1 bis 50 mm reicht;
(2) Aufbringen einer ungeheizten wäßrigen Flüssigkeit auf die Oberfläche der Partikel, um ein Benetzen und Aufweichen der Oberfläche der Partikel zu erreichen;
(3) Komprimieren der Partikel mit aufgeweichter Oberfläche ohne Zufuhr äußerer Wärme, um Kohäsion zwischen den Oberflächen der aufgeweichten Partikel, eine Verdichtung der Partikel und das Ausbilden eines geformten Artikels zu erreichen; und
(4) Halten des geformten Artikels oder einer derartigen Kompression ohne Zufuhr äußerer Wärme für einen Zeitraum, der ausreicht, um die Oberfläche der Partikel durch Absorption der benetzenden Flüssigkeit in die Partikel und durch Verdunsten der benetzenden Flüssigkeit nicht klebrig zu machen, dadurch gekennzeichnet, daß
(5) die Partikel mit benetzter Oberfläche am Boden eines Versandbehälters (19) angeordnet werden und ein Versandartikel (21) auf die benetzten Partikel aufgelegt wird, um eine Kompression der Partikel zu erreichen, wobei ein Abstand zwischen den Außenseiten des Versandartikels (21) und den Innenseiten des Versandbehälters (19) freibleibt;
(6) der Abstand zwischen den Außenseiten des Versandartikels und den Innenseiten des Containers gefüllt wird und der Versandartikel mit benetzen Partikeln bis zu einem Niveau oberhalb der Seiten des Versandbehälters bedeckt wird; und
(7) der Versandartikel (19) geschlossen wird, um Kompression der benetzten Partikel und Kohäsion der benetzten Partikel entsprechend der inneren Oberflächen des Versandbehälters (19) und der äußeren Oberflächen des Versandartikel (21) zu erreichen.

2. Verfahren nach Anspruch 1, in dem die Partikel in der Bodenschicht in einem Sack (17a) aufgenommen sind.

3. Verfahren nach Anspruch 1, in dem die Partikel, die die Seiten des Versandbehälters füllen und die Oberseite des Versandartikels abdekken, in einem Sack (17b) aufgenommen sind.

4. Verfahren nach Anspruch 1, in dem Schritt (5) weiter den Schritt des Anordnens einer dünnen, flexiblen Folie von Filmmaterial (17a) oben auf den benetzten Partikeln am Boden des Versandbehälters (19) vor dem Einlegen des Versandartikels (21) umfaßt.

5. Verfahren nach Anspruch 3 oder 4, in dem der Sack (17a, 17b) und die Filmmaterialien (17a) biologisch abbaubar sind.

6. Verfahren nach Anspruch 5, in dem der biologisch abbaubare Sack und Film aus Poly(lactid) hergestellt sind.

7. Verfahren nach Anspruch 5, in dem der biologisch abbaubare Sack und das Filmmaterial aus Poly(lactid), Poly(ethylenvinylalkohol), Polycaprolacton und Mischungen davon ausgewählt sind.

8. Verfahren nach Anspruch 5, in dem der biologisch abbaubare Sack und der Film aus Poly(vinylalkohol) hergestellt sind.

9. Verfahren nach Anspruch 5, in dem der biologisch abbaubare Sack oder Film aus einem Cellulosematerial hergestellt ist.

## Revendications

1. Procédé pour fabriquer des formes d'emballage moulées comprenant les étapes successives consistant à :
(1) former une pluralité de particules ayant une densité de 0,003-0,03 g/cm³ comprenant un mélange, amené à l'état de mousse, d'un polymère biodégradable d'amidon et d'eau, la taille des particules étant comprise entre 1 et 50 mm;
(2) appliquer à la surface des particules un liquide aqueux non chauffé pour réaliser le mouillage et le ramollissement des surfaces des particules ;
(3) comprimer, sans application de chaleur extérieure, les particules, dont la surface est ramollie, pour établir une cohésion entre les surfaces des particules ramollies, une densification des particules et une formation d'un article conformé ; et
(4) maintenir, sans application de chaleur extérieure, l'article conformé sous une telle compression pendant un intervalle de temps suffisant pour rendre la surface des particules non collante par adsorption du liquide de mouillage dans les particules et par évaporation du liquide de mouillage,
caractérisé en ce que
(5) on place les particules, dont la surface est mouillée, dans le fond d'un récipient d'expédition (19) et on place un article à expédier (21) au-dessus des particules mouillées pour produire une compression des particules en laissant subsister un espace entre les côtés extérieurs de l'article à expédier (21) et les côtés intérieurs du récipient (19) ;
(6) on remplit l'espace entre les côtés extérieurs de l'article et les côtés intérieurs du récipient et on recouvre l'article par des particules mouillées, à un niveau s'élevant au-dessus des côtés du récipient d'expédition ; et
(7) on ferme le récipient (19) pour réaliser une compression des particules mouillées et une cohésion de ces particules mouillées d'une manière adaptée aux surfaces intérieures du récipient (19) et aux surfaces extérieures de l'article à expédier (21).

2. Procédé selon la revendication 1, dans lequel les particules de la couche inférieure sont contenues dans un sachet (17a).

3. Procédé selon la revendication 1, dans lequel les particules remplissant les côtés du récipient et recouvrant les parties supérieures de l'article sont contenues dans un sachet (17b).

4. Procédé selon la revendication 1, dans lequel l'étape (5) comporte, en outre, l'étape de mise en place d'une feuille mince flexible d'un matériau en forme de film (17a) au-dessus des particules mouillées dans le fond du récipient d'expédition (19) avant la mise en place de l'article à expédier (21).

5. Procédé selon la revendication 3 ou 4, dans lequel les matériaux du sachet (17a,17b) et du film (17a) sont biodégradables.

6. Procédé selon la revendication 5, dans lequel le sachet et le film biodégradables sont formés de poly(lactide).

7. Procédé selon la revendication 5, dans lequel le matériau biodégradable du sachet et du film est choisi parmi le poly(lactide), l'alcool polyéthylènevinylique, la polycaprolactone et les mélanges de ces substances.

8. Procédé selon la revendication 5, dans lequel le sachet et le film biodégradables sont formés d'alcool polyvinylique.

9. Procédé selon la revendication 5, dans lequel le sachet ou le film biodégradable est formé d'un matériau cellulosique.
